# EUROPEAN PATENT APPLICATION

(11) **EP 4 530 840 A1**
(43) Date of publication of application: **02.04.2025**
(21) Application number: 23200867.2
(22) Date of filing: 29.09.2023
(51) Int. Cl.: G06F 9/48, G06F 1/3206, G06F 1/329, G06F 9/50, G06Q 50/06

(54) **COMPUTER-IMPLEMENTED METHOD, COMPUTER PROGRAM PRODUCT, DATA CENTER AND SYSTEM FOR PROCESSING DATA**

(71) Applicant: Siemens Aktiengesellschaft, 80333 München (DE)
(72) Inventor: Hohenstein, Uwe, 85591 Vaterstetten (DE); Tinnes, Christof, 57520 Grosbliederstroff (FR)
(74) Representative: Siemens Patent Attorneys

(57) **Abstract**

A computer-implemented method for processing data is proposed. The method includes:
a) continuously monitoring, preferably by at least a monitoring unit connected with a data center, electrical energy provided by a power generation source to the data center for collecting energy mix information indicating a current electrical energy mix including fossil energy and renewable energy included in the provided electrical energy,
b) providing the collected energy mix information to a specific application executable in the data center, and
c) executing a part of the specific application on the basis of the provided energy mix information within a specific time period when the power generation source provides renewable energy, the part of the specific application preferably being computing-intensive.

## Description

The present invention relates to a computer-implemented method, a computer program product, a data center and a system for processing data.

The Anthropocene with its increasing impact of humankind on earth has led to challenges such as climate change, degradation of biodiversity, and deforestation. Industrialization absolutely decreased poverty of people while there is still an increase in relative poverty. These challenges draw more and more attention from individuals and organizations calling for immediate action. Software plays a key role in modern systems and society. Therefore, sustainability aspects, especially energy efficiency and CO2 footprints, must be considered throughout the lifetime of a software system.

In this manner, many heavy computations or (long-running) jobs run in data centers as soon as they are started, or regularly at night so as not to disturb other software systems. However, the CO2 footprint of these applications is currently not considered for their scheduling. For example, the data center might be running on coal-fired power at night (resulting in higher CO2 emission), whereas during the day there might be a surplus of solar power.

Conventionally, the main focus in academia and industry has been on a different topic, namely saving energy by reducing the complexity and required resources of software. This does improve the CO2 footprint in general.

In the area of cloud application, economic multiplexing effects, asynchronous jobs, live migration of virtual machines to free resources and many other techniques in data centers already aim at optimal resource utilization.

From prior art, there are already software libraries known that can be used to query the energy mix in larger regions via data platforms such as "https://www.watttime.org". However, this information is very coarse-grained covering large regions.

Cloud platforms such as Google Cloud Platform also provide reports that summarize and allow determining the CO2 footprint of applications. In addition, information is provided that makes it possible to optimize the infrastructure regarding CO2 emissions. However, such information is static information.

Thus, it is one object of the present invention to reduce the CO2 emission of a data center.

According to a first aspect, a computer-implemented method for processing data is proposed. The method includes:
a) continuously monitoring, in particular by at least a monitoring unit connected with a data center, electrical energy provided by a power generation source to the data center for collecting energy mix information indicating a current electrical energy mix including fossil energy and renewable energy included in the provided electrical energy,
b) providing the collected energy mix information to a specific application executable in the data center, and
c) executing a part of the specific application on the basis of the provided energy mix information within a specific time period when the power generation source provides renewable energy, the part of the specific application particularly being computing-intensive.

The CO2 emission of a data center may be reduced since the computer-implemented method according to the first aspect makes it possible to provide real-time energy mix information (carbon emission information) to the specific application. This enables the data center to optimize its carbon footprint in a self-aware manner.

In detail, the advantage of the above-mentioned computer-implemented method according to the first aspect is to provide fine-grained information in real-time at runtime about the energy mix provided by a power generation source to the specific application. Based on this real-time energy mix information, the specific application is capable of optimizing their carbon footprint by moving computing-intensive jobs (workloads) based on an execution plan to time slots where renewable energy (green energy) is provided and using non-computing-intensive jobs based on the execution plan during time slots when fossil energy is available.

In particular, a computer-implemented method is a method which utilizes a computer, a computer network or another programmable device, wherein one or multiple features are wholly or partially realized by means of a computer program. In particular, the data center is a building, a dedicated space within a building, or a group of buildings used to house computer systems and associated components, such as telecommunications and storage systems, for processing and executing data.

In particular, the power generation source is arranged external to the data center. Preferably, the electrical energy provided by the power generation source is provided via an electrical wire or electrical wires to the inverter unit. The electrical energy is, for example, direct current from a solar plant or a wind turbine in case if the electrical energy includes renewable energy. Further, parts or an amount of the provided electrical energy can also be alternating current.

In addition, the power generation source can include multiple power supply sources such as fossil energy and renewable energy. Examples for fossil energy include coal, nuclear energy, oil, and/or natural gas. Examples for renewable energy include sunlight, wind, the movement of water, and/or geothermal heat.

Preferably, the current energy mix information includes a ratio or a proportion of how much fossil energy and how much renewable energy is currently provided by at least a fossil energy generation source and by at least a renewable energy generation source included in the provided electrical energy.

In particular, a specific application of the data center can be a machine learning model.

Preferably, a software library is configured to query the collected energy mix information from the energy meter or the data center and to provide the collected energy mix information and/or forecast information to the specific application. Then, the specific application can use the collected energy mix information to optimize its carbon footprint. For example, in a case when coal power (fossil energy) is currently used, the specific application can decide to run a lite machine learning model (alternative part of the specific application) with a lower accuracy and only switch to more heavy-weight machine learning models (part of the spe-cific application) when solar and/or wind electricity (re-newable energy) is used instead. In particular, the part of the specific application includes a specific set of instructions, and the alternative part of the specific application includes an alternative set of instructions.

In addition, the data center includes multiple different or same specific applications.

According to an embodiment, steps a) to c) are performed in real-time and during the runtime of at least the data center.

Advantageously, this embodiment provides the fine-grained information about the energy mix in real-time and during the runtime of the data center to the specific application.

According to a further embodiment, at least a specific amount of electrical current of the renewable energy includ-ed in the provided electrical energy is inputted and stored into an uninterruptible power supply of the data center, wherein step c) further includes:
executing the part of the specific application on the basis of the provided energy mix information and on the basis of the stored specific amount of electrical current of the renewable energy within a further specific time period when the uninterruptible power supply has stored the specific amount of electrical current of the renewable energy.

In particular, an uninterruptible power supply (UPS) is a type of continual power system that provides automated backup electric power to a load, in particular at least the specific application, when the input power source or main power fails.

Preferably, if the power generation source produces an excess of renewable energy, it can be inputted and stored into the UPS, wherein this excessed renewable energy corresponds to the specific amount of electrical current of the renewable energy.

According to a further embodiment, the provided energy mix information is outputted by means of an interface unit, in particular an application programming interface, of the data center to a user. For example, the interface unit is a web interface. The user can be an operator, a customer or an end-user of the data center.

According to a further embodiment, the method further includes:
d) monitoring the electrical energy provided by the power generation source over a specific time interval for collecting historical energy mix information indicating an electrical energy mix including fossil energy and renewable energy included in the provided electrical energy,
e) evaluating the collected historical energy mix information for providing a forecast information indicating future renewable energy time slots in the provided electrical energy, and
f) applying the provided forecast information to the specific application.

Preferably, the provided forecast information indicates time intervals in the future which are suitable for performing computing-intensive specific applications since in these time intervals only renewable energy is available.

According to a further embodiment, the method further includes:
g) executing an alternative part of the specific application on the basis of the applied forecast information within a fossil energy time slot when the power generation source provides fossil energy, wherein the alternative part of the specific application is non-computing-intensive, and/or
executing the part of the specific application on the basis of the applied forecast information within the renewa-ble energy time slot when the power generation source pro-vides renewable energy.

Thus, according to this embodiment, if a renewable energy time slot occurs in the future or in the present, computing-intensive specific applications are executed, wherein if a fossil energy time slot occurs in the future or in the present, non-computing-intensive specific applications are executed.

According to a further embodiment, step e) further includes:
determining, based on the provided forecast information, an execution plan for executing multiple long-running workloads in the data center within the renewable energy time slot or multiple renewable energy time slots.

Preferably, the execution plan indicates over a long period of time at which renewable energy time slots it is suitable to execute the computing-intensive specific applications for reducing and optimizing the carbon footprint.

According to a further embodiment, at least a long-running workload of the multiple long-running workloads is embodied as a batch job, wherein, in dependence on a constraint satisfaction problem solver, the determined execution plan for executing the batch job within the renewable energy time slot or the multiple renewable energy time slots is execut-ed.

In this embodiment, an optimal execution plan for long-running workloads can be computed by a scheduling application based on the energy mix forecast information. Therefore, long running workloads can be scheduled in a way to optimize the carbon emission of the workloads, e.g., by finding an appropriate CO2-neutral slot (a renewable energy time slot). Further, in particular, the batch job framework can use a constraint satisfaction problem solver to optimize the batch job scheduling.

Moreover, the determined execution plan can provide necessary meta-information, such as expected run-time or memory consumption, to the data center and the specific applications.

For example, a batch job is a scheduled program that is assigned to run on a computer of a data center in the background without further user interaction.

Preferably, a constraint satisfaction problem solver is a software or a program for solving the constraint satisfaction problem with a systematic search technique.

According to a further embodiment, step b) further includes:
outputting the provided energy mix information and/or the provided forecast information to an electricity provider.

Also, the data center can provide energy mix information (and forecast information) to electricity providers. By us-ing energy mix forecast information and electricity demand forecasts, electricity providers and data centers can optimize their carbon footprint via a control loop. In particular, this means that if the electricity provider knows, based on the forecast information, in advance that in the future a renewable energy time slot will come, the electric-ity provider starts its energy intensive specific applica-tions to use the renewable energy time slot and to reduce its carbon footprint.

According to a further embodiment, the specific application is embodied as a cloud application and/or the data center is embodied as a cloud data center.

According to a further embodiment, step a) further includes:
processing and aggregating the continuously monitored energy information by means of an energy meter of the data center for obtaining the collected energy mix information.

Also, the energy meter is capable of processing and aggregating the continuously monitored energy information of multiple inverter units of the data center for obtaining the collected energy mix information.

According to a further embodiment, the at least one monitoring unit is embodied as a determining unit which determines the type of energy carrier of the electrical current in the electrical energy, wherein the type of energy carrier includes fossil energy and renewable energy.

The type of energy carrier indicates the energy source, for example coal, oil, gas, wind, solar, water or the like.

According to a further embodiment, the data center includes an inverter unit, wherein the inverter unit converts the electrical energy provided by the power generation source and provides the converted electrical energy to the data center for suppling the data center with converted electri-cal energy.

In particular, the inverter unit is embodied is a hybrid inverter.

Preferably, the converting of the electrical energy to the converted electrical energy includes a converting of direct current electrical energy provided by the power generation source into alternating current converted electrical energy. In addition, the converting of the electrical energy to the converted electrical energy can include a converting of alternating current electrical energy provided by the power generation source into direct current converted electrical energy.

Specifically, the hybrid inverter controls the uninterruptible power supply such that parts or amounts of the electrical current provided by the power generation source during a renewable energy time slot are inputted into the uninterruptible power supply. Moreover, the hybrid inverter can manage the power distribution of the electrical current provided by the power generation source and/or the power generation source for optimizing the outputted power of the power generation source.

The respective unit, e.g., the inverter unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

Any embodiment of the first aspect may be combined with any embodiment of the first aspect to obtain another embodiment of the first aspect.

According to a second aspect, a computer program product comprising a program code for executing the computer-implemented method according to the first aspect or embodiments of the first aspect when run on at least one computer is proposed.

A computer program product, such as a computer program means, may be embodied as a memory card, USB stick, CD-ROM, DVD or as a file which may be downloaded from a server in a network. For example, such a file may be provided by trans-ferring the file comprising the computer program product from a wireless communication network.

According to a third aspect, a data center for processing data is proposed. The data center includes:
a receiving unit which is configured to receive an energy mix information indicating a current electrical energy mix including fossil energy and renewable energy included in the electrical energy provided to the data center by a power generation source,
a providing unit which is configured to provide the received energy mix information to a specific application executable in the data center, and
an executing unit which is configured to execute a part of the specific application on the basis of the provided energy mix information within a specific time period when the power generation source provides renewable energy, the part of the application particularly being computing-intensive.

The technical effects and advantages described for the computer-implemented method according to the first aspect apply equally to the data center according to the third aspect.

The respective unit, e.g., the executing unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

According to a fourth aspect, a system for processing data including a data center, a monitoring unit connected to the data center and preferably an energy meter is proposed. The monitoring unit is configured to continuously monitor electrical energy provided by a power generation source to the data center for collecting energy mix information indicating a current electrical energy mix including fossil energy and renewable energy included in the provided electrical energy. The data center is configured to provide the collected energy mix information to a specific application executable in the data center, and to execute a part of the specific application on the basis of the provided energy mix information within a specific time period when the power generation source provides renewable energy, the part of the application particularly being computing-intensive.

Preferably, the system can also be implemented within an automation plant or as an automation plant, wherein the automation plant can be a plant from the process industry, the chemical industry, the pharmaceutical industry, the petrochemical industry, from the mobility industry, such as a railroad control system, from the manufacturing and production industry or a plant from the food and beverage industry. Further, the automation plant can be embodied within an energy generation plant.

According to an embodiment of the fourth aspect, the monitoring unit is further configured to continuously monitor the electrical energy provided by the power generation source in real-time and during the runtime of at least the data center, wherein the data center is configured to pro-vide the collected energy mix information and execute the part of the specific application in real-time and during the runtime of at least the data center.

The technical effects and advantages described for the computer-implemented method according to the first aspect apply equally to the system according to the fourth aspect.

Further, embodiments and features described with reference to the computer-implemented method according to the first aspect apply mutatis mutandis to the system according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
Fig. 1 shows a schematic block diagram of an embodiment of a system for processing data;
Fig. 2 shows a schematic flow chart of an embodiment of a computer-implemented method for processing data; and
Fig. 3 shows a schematic block diagram of an embodiment of a data center.

In the Figures, like reference numerals designate like or functionally equivalent elements, unless otherwise indicated.

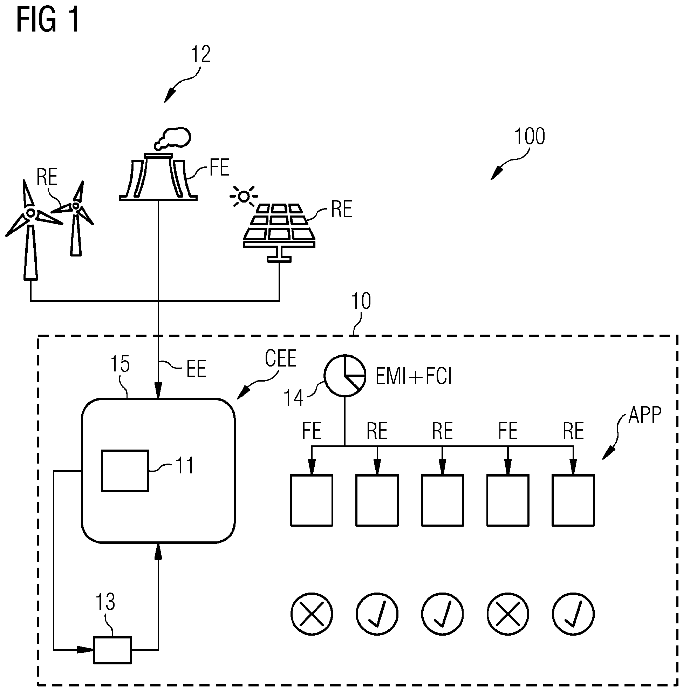

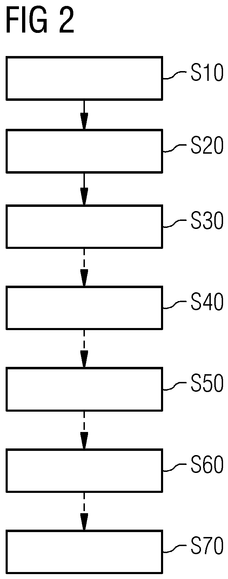

Fig. 1 shows a schematic block diagram of a system 100 for processing data including a data center 10, a monitoring unit 11 connected to the data center 10, an uninterruptible power supply 13, an energy meter 14 and an inverter unit 15. In addition, references to the method steps of Fig. 2, which describes a computer-implemented method for processing data are indicated in parentheses in the following explanations of Fig. 1.

First, the monitoring unit 11 is configured to continuously monitor electrical energy EE provided by a power generation source 12 to the data center 10 in real-time and during the runtime of the data center 10 for collecting energy mix information EMI indicating a current electrical energy mix including fossil energy FE and renewable energy RE included in the provided electrical energy EE (see also method step S10 of Fig. 2).

In Fig. 1, the monitoring unit 11 is embodied as a determining unit which determines the type of energy carrier of the electrical current in the electrical energy EE. The type of energy carrier includes fossil energy FE and renewable energy RE.

Also, the energy meter 14 is configured to process and aggregate the continuously monitored energy information for obtaining the collected energy mix information EMI.

Next, the data center 10 is configured to provide in real-time and during the runtime of the data center 10 the collected energy mix information EMI to a specific application APP executable in the data center 10 (see also method step S20 of Fig. 2). In Fig. 1, the specific application APP is embodied as a cloud application and the data center 10 is embodied as a cloud data center.

In addition, the data center 10 is further configured to execute, in real-time and during the runtime of the data center 10, a part of the specific application APP on the basis of the provided energy mix information EMI within a specific time period when the power generation source 12 provides renewable energy RE, wherein said part of the application APP is particularly computing-intensive (see also method step S30 of Fig. 2).

Further, at least a specific amount of electrical current of the renewable energy RE included in the provided electrical energy EE is inputted and stored into the uninterruptible power supply 13 of the data center 10. In this context, the data center 10 is configured to execute the part of the specific application APP on the basis of the provided energy mix information EMI and on the basis of the stored specific amount of electrical current of the renewable energy RE within a further specific time period when the uninterruptible power supply 13 has stored the specific amount of electrical current of the renewable energy RE (see also method step S30 of Fig. 2).

Moreover, an interface unit, in particular an application programming interface, of the data center 10 is configured to output the provided energy mix information EMI to a user.

Besides, the energy meter 14 is configured to monitor the electrical energy EE provided by the power generation source 12 over a specific time interval for collecting historical energy mix information indicating an electrical energy mix including fossil energy FE and renewable energy RE included in the provided electrical energy EE (see also method step S40 of Fig. 2).

Also, the energy meter 14 is configured to evaluate the collected historical energy mix information for providing a forecast information FCI indicating future renewable energy time slots in the provided electrical energy EE (see also method step S50 of Fig. 2). Further, the data center 10 is configured to determine based on the provided forecast information FCI, an execution plan for executing multiple long-running workloads in the data center 10 within the re-newable energy time slot or multiple renewable energy time slots (see also method step S50 of Fig. 2).

Here, a long-running workload is embodied as a batch job. The data center 10 is configured to execute, in dependence on a constraint satisfaction problem solver, the determined execution plan for executing the batch job within the renewable energy time slot or the multiple renewable energy time slots.

Then, the data center 10 is configured to apply the provided forecast information FCI to the specific application APP (see also method step S60 of Fig. 2).

In addition, the data center 10 is configured to execute an alternative part of the specific application APP on the basis of the applied forecast information FCI within a fossil energy time slot when the power generation source 12 provides fossil energy FE, wherein the alternative part of the specific application APP is non-computing-intensive, and/or the data center 10 is configured to execute the part of the specific application APP on the basis of the applied forecast information FCI within the renewable energy time slot when the power generation source 12 provides renewable energy RE (see also method step S70 of Fig. 2).

In this manner, the data center 10 is configured to output the provided energy mix information EMI and/or the provided forecast information FCI to an electricity provider (see also method step S20 of Fig. 2).

Moreover, the inverter unit 15 is configured to convert the electrical energy EE provided by the power generation source 12 and to provide the converted electrical energy CEE to the data center 10 for suppling the data center 10 with converted electrical energy CEE.

In addition, as shown in Fig. 1, in the data center 10, there are multiple specific applications APP arranged. Some of them get as an input fossil energy FE and some of them gets as an input renewable energy RE. For example, the left-most specific application APP in Fig. 1 gets as an input fossil energy FE. Thus, the specific application APP is not executed at least during this fossil energy time slot. The same applies for the second specific application APP from the right (see Fig. 1, the two circles with the cross in-side). Instead, the specific applications APP arranged sec-ond from the left, in the middle and the rightmost get as an input renewable energy RE. Therefore, these specific appli-cations APP are executed since the electrical energy EE pro-vided by the power generation source 12 is at this time slot renewable energy RE (see Fig. 1, the respective three cir-cles with the check mark inside).

Fig. 2 shows a schematic flow chart of a computer-implemented method for processing data in a system 100 (see Fig. 1) including a data center 10 (see Fig. 1). The respec-tive method steps S10 - S30 of the computer-implemented method have already been explained above with respect to Fig. 1. Therefore, in order to avoid repetitions, the method steps S10 - S30 are not discussed again. Further, embodi-ments of the computer-implemented method of Fig. 2 include the method steps S40 - S70. Thus, the method steps S40 - S70 are connected with the method steps S10 - S30 in Fig. 2 with a respective dotted line. Also, method steps S40 - S70 have already been explained above with respect to Fig. 1.

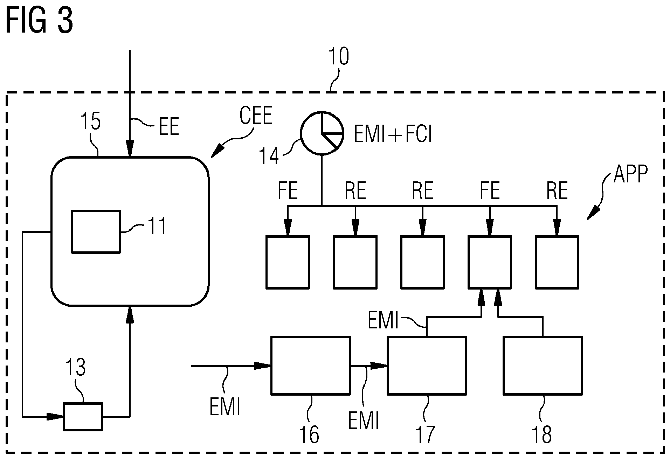

In Fig. 3, a schematic block diagram of an embodiment of a data center 10 is depicted. The embodiment of the data center 10 of Fig. 3 particularly includes all the features of the data center 10 of Fig. 1. Additionally, the data center 10 of Fig. 3 includes a receiving unit 16, a providing unit 17 and an executing unit 18. The receiving unit 16 is configured to receive an energy mix information EMI indicating a current electrical energy mix including fossil energy FE and renewable energy RE included in the electrical energy provided to the data center 10 by a power generation source 12 (see Fig. 1, for example). The providing unit 17 is configured to provide the received energy mix information EMI to a specific application APP executable in the data center 10. Moreover, the executing unit 18 is configured to execute a part of the specific application APP on the basis of the provided energy mix information EMI within a specific time period when the power generation source 12 provides renewable energy RE. In particular, the part of the application APP is computing-intensive.

Although the present invention has been described in accordance with preferred embodiments, it is obvious for the person skilled in the art that modifications are possible in all embodiments.

### Reference Numerals:

- 10: data center
- 11: monitoring unit
- 12: power generation source
- 13: uninterruptible power supply
- 14: energy meter
- 15: inverter unit
- 16: receiving unit
- 17: providing unit
- 18: executing unit
- 100: system

- APP: specific application
- CEE: converted electrical energy
- EE: electrical energy
- EMI: energy mix information
- FCI: forecast information
- FE: fossil energy
- RE: renewable energy
- S10 - S70: method steps

## Claims

1. Computer-implemented method for processing data, the method including:
a) continuously monitoring (S10), in particular by at least a monitoring unit (11) connected with a data center (10), electrical energy (EE) provided by a power generation source (12) to the data center (10) for collecting energy mix information (EMI) indicating a current electrical energy mix including fossil energy (FE) and renewable energy (RE) included in the provided electrical energy (EE),
b) providing (S20) the collected energy mix information (EMI) to a specific application (APP) executable in the data center (10), and
c) executing (S30) a part of the specific application (APP) on the basis of the provided energy mix information (EMI) within a specific time period when the power generation source (12) provides renewable energy (RE), the part of the specific application particularly being computing-intensive (APP).

2. The method according to claim 1,
**characterized in**
**that** steps a) to c) are performed in real-time and during the runtime of at least the data center (10).

3. The method according to claim 1 or 2,
**characterized in**
**that** at least a specific amount of electrical current of the renewable energy (RE) included in the provided electrical energy (EE) is inputted and stored into an uninterruptible power supply (13) of the data center (10), wherein step c) (S30) further includes:
executing the part of the specific application (APP) on the basis of the provided energy mix information (EMI) and on the basis of the stored specific amount of electrical current of the renewable energy (RE) within a further spe-cific time period when the uninterruptible power supply (13) has stored the specific amount of electrical current of the renewable energy (RE).

4. The method according to one of claims 1 - 3,
**characterized in**
**that** the provided energy mix information (EMI) is outputted by means of an interface unit, in particular an application programming interface, of the data center (10) to a user.

5. The method according to one of claims 1 - 4,
**characterized by**:
d) monitoring (S40) the electrical energy (EE) provided by the power generation source (12) over a specific time interval for collecting historical energy mix information indicating an electrical energy mix including fossil energy (FE) and renewable energy (RE) included in the provided electrical energy (EE),
e) evaluating (S50) the collected historical energy mix information for providing a forecast information (FCI) indicating future renewable energy time slots in the provided electrical energy (EE), and
f) applying (S60) the provided forecast information (FCI) to the specific application (APP).

6. The method according to claim 5,
**characterized by**:
g) executing (S70) an alternative part of the specific application (APP) on the basis of the applied forecast information (FCI) within a fossil energy time slot when the power generation source (12) provides fossil energy (FE), wherein the alternative part of the specific application (APP) is non-computing-intensive, and/or
executing the part of the specific application (APP) on the basis of the applied forecast information (FCI) with-in the renewable energy time slot when the power generation source (12) provides renewable energy (RE).

7. The method according to claim 6,
**characterized in**
**that** step e) (S50) further includes:
determining, based on the provided forecast information (FCI), an execution plan for executing multiple long-running workloads in the data center (10) within the renewable energy time slot or multiple renewable energy time slots.

8. The method according to claim 7,
**characterized in**
**that** at least a long-running workload of the multiple long-running workloads is embodied as a batch job, wherein, in dependence on a constraint satisfaction problem solver, the determined execution plan for executing the batch job within the renewable energy time slot or the multiple renewable energy time slots is executed.

9. The method according to one of claims 5 - 8, **characterized in**
**that** step b) (S20) further includes:
outputting the provided energy mix information (EMI) and/or the provided forecast information (FCI) to an electricity provider.

10. The method according to one of claims 1 - 9,
**characterized in**
**that** the specific application (APP) is embodied as a cloud application and/or the data center (10) is embodied as a cloud data center.

11. The method according to one of claims 1 - 10,
**characterized in**
**that** step a) (S10) further includes:
processing and aggregating the continuously monitored energy information by means of an energy meter (14) of the data center (10) for obtaining the collected energy mix information (EMI).

12. The method according to one of claims 1 - 11,
**characterized in**
**that** the at least one monitoring unit (11) is embodied as a determining unit which determines the type of energy carrier of the electrical current in the electrical energy (EE), wherein the type of energy carrier includes fossil energy (FE) and renewable energy (RE).

13. The method according to one of claims 1 - 12,
**characterized in**
**that** the data center (10) includes an inverter unit (15), wherein the inverter unit (15) converts the electrical energy (EE) provided by the power generation source (12) and provides the converted electrical energy (CEE) to the data center (10) for suppling the data center (10) with converted electrical energy (CEE).

14. A computer program product comprising a program code for executing the computer-implemented method according to one of claims 1 - 13 when run on at least one computer.

15. A data center (10) for processing data, the data center (10) including:
a receiving unit (16) which is configured to receive an energy mix information (EMI) indicating a current electrical energy mix including fossil energy (FE) and renewable energy (RE) included in the electrical energy provided to the data center (10) by a power generation source (12),
a providing unit (17) which is configured to provide the received energy mix information (EMI) to a specific application (APP) executable in the data center (10), and
an executing unit (18) which is configured to execute a part of the specific application (APP) on the basis of the provided energy mix information (EMI) within a specific time period when the power generation source (12) provides renew-able energy (RE), the part of the application (APP) particu-larly being computing-intensive.

16. A system (100) for processing data including a data center (10), a monitoring unit (11) connected to the data center (10) and preferably an energy meter (14), wherein the monitoring unit (11) is configured to:
continuously monitor electrical energy (EE) provided by a power generation source (12) to the data center (10) for collecting energy mix information (EMI) indicating a current electrical energy mix including fossil energy (FE) and renewable energy (RE) included in the provided electrical energy (EE), wherein the data center (10) is configured to:
provide the collected energy mix information (EMI) to a specific application (APP) executable in the data center (10), and
execute a part of the specific application (APP) on the basis of the provided energy mix information (EMI) within a specific time period when the power generation source (12) provides renewable energy (RE), the part of the application (APP) particularly being computing-intensive.

17. The system according to claim 16,
**characterized in**
**that** the monitoring unit (11) is further configured to continuously monitor the electrical energy (EE) provided by the power generation source (12) in real-time and during the runtime of at least the data center (10), wherein the data center (10) is configured to provide the collected energy mix information (EMI) and execute the part of the specific application (APP) in real-time and during the runtime of at least the data center (10).
